Europäisches Patentamt

European Patent Office

Office européen des brevets

(19)

(11) Numéro de publication: **0 001 362**
**A1**

# (12) DEMANDE DE BREVET EUROPEEN

(21) Numéro de dépôt: **78400092.9**

(22) Date de dépôt: **08.09.78**

(51) Int. Cl.²: **G 02 F 1/17**

(30) Priorité: **15.09.77 FR 7727851**

(43) Date de publication de la demande:
**04.04.79 Bulletin 79/7**

(84) Etats contractants désignés:
**CH DE GB NL**

(71) Demandeur: **COMMISSARIAT A L'ENERGIE ATOMIQUE**
**B.P. 510**
**F-75752 Paris Cedex 15(FR)**

(72) Inventeur: **Delapierre, Gilles**
**216 Percevalière**
**F-38170 Seyssinet(FR)**

(74) Mandataire: **Mongredien, André et al,**
**c/o Brevatome 25, rue de Ponthieu**
**F-75008 Paris(FR)**

(54) **Procédé de commande d'une cellule d'affichage électrolytique et circuit de mise en oeuvre.**

(57)  Procédé et circuit de commande d'une cellule d'affichage électrolytique (2).

L'affichage s'effectue en chargeant un condensateur (10) à travers la cellule (2) au moyen d'une source de tension (14) et l'effacement en déchargeant ledit condensateur à travers ladite cellule.

Application à l'affichage de caractères.

FIG 1

EP 0 001 362 A1

La présente invention a pour objet un procédé de commande d'une cellule d'affichage électrolytique et un circuit pour sa mise en oeuvre.

Une cellule d'affichage électrolytique comprend, très schématiquement, un électrolyte, généralement un sel métallique, inséré entre deux électrodes de formes appropriées dont l'une au moins est transparente. Une source de tension permet de porter ces électrodes à des potentiels déterminés dans le but de provoquer soit un dépôt, par réduction électrochimique, d'une couche de métal sur l'une des électrodes (ce qui permet l'affichage d'un signe), soit la redissolution de ladite couche, par oxydation électrochimique (ce qui permet de faire disparaître le signe affiché).

Dans un tel moyen d'affichage, l'épaisseur du film métallique déposé est directement proportionnelle à la charge électrique qui a traversé la cellule. L'effacement complet de ce film nécessite donc qu'une charge égale traverse la cellule, mais en sens contraire. Un défaut de charge à l'effacement conduirait à une accumulation de métal sur l'électrode et, inversement, un excès de charge à l'effacement conduirait à un dégagement gazeux qui nuirait à la fiabilité de la cellule.

On s'efforce donc de commander les cellules d'affichage électrolytique par des moyens assurant l'égalité des charges et cela s'obtient en général par un contrôle des temps d'affichage et d'effacement. Mais, les moyens utilisés pour ce faire sont complexes et coûteux.

La présente invention a justement pour but une simplification de ces moyens de commande, qui préserve l'égalité entre les charges d'affichage et d'effacement, avec en outre une possibilité de provoquer un léger excès de charge à l'effacement.

De façon précise, l'invention a pour objet un procédé de commande d'une cellule d'affichage électrolytique dans lequel l'affichage d'un signe est obtenu par le passage, dans un sens, d'une première charge électrique à travers la cellule et l'effacement par le passage d'une deuxième charge électrique dans le sens contraire, caractérisé en ce que l'affichage s'effectue en chargeant un condensateur à travers la cellule au moyen d'une source de tension, et en ce que l'effacement s'effectue en déchargeant ledit condensateur à travers ladite cellule.

L'invention a également pour objet un circuit de commande d'une cellule d'affichage électrolytique, mettant en oeuvre le procédé qui vient d'être défini, ladite cellule possédant une électrode et une contre-électrode, caractérisé en ce qu'il comprend un condensateur dont une première armature est reliée à l'électrode de la cellule et une seconde armature à un organe de commutation apte à relier cette seconde armature, soit à une source de tension continue, soit à ladite contre-électrode.

De toute façon, les caractéristiques et avantages de la présente invention apparaîtront mieux après la description qui suit, d'un exemple de réalisation donné à titre explicatif et nullement limitatif, en référence aux figures annexées sur lesquelles :

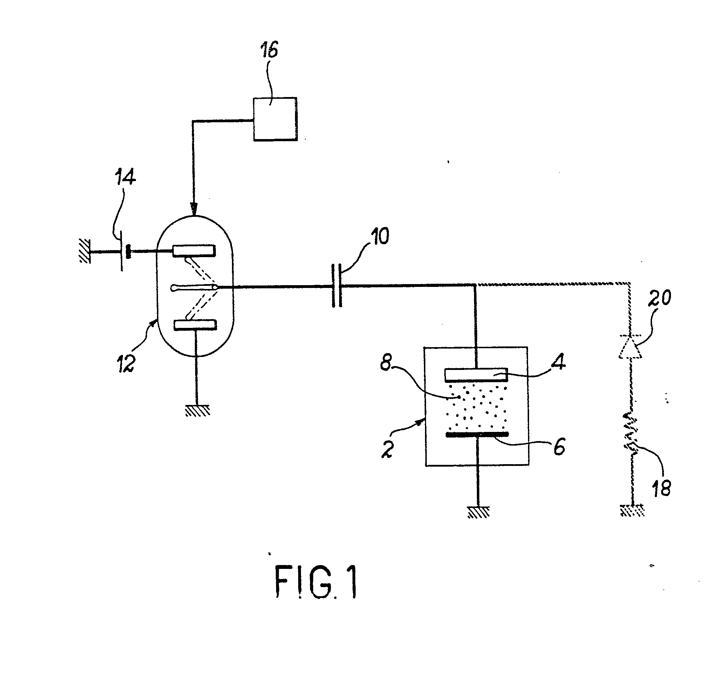

- la figure 1 représente un circuit de commande conforme à l'invention,

- la figure 2 représente des modes de réalisation particuliers de l'organe de commutation.

0001362

Sur cette figure, une cellule d'affichage électrolytique 2 comprend schématiquement une électrode transparente 4, une contre-électrode 6 et un électrolyte 8. Selon l'invention, l'électrode 4 est reliée à l'une des armatures d'un condensateur 10, dont l'autre armature est reliée à un organe de commutation 12 permettant de relier cette armature, soit à une source de tension 14, soit à la contre-électrode 6, par la masse par exemple. Une position intermédiaire peut être prévue où l'armature mobile reste "en l'air". La position de l'organe de commutation 12 est commandée par un circuit approprié 16.

Le fonctionnement de ce circuit est le suivant. Pour commander l'affichage d'un signe sur l'électrode 4, on relie le condensateur 10 à la source 14. Le condensateur se charge alors à travers la cellule électrolytique qui se voit traversée par une quantité de charges égale à la quantité de charges emmagasinée dans le condensateur, laquelle ne dépend que de la tension de la source et de la capacité. Si l'on veut maintenir l'affichage, on peut soit laisser le système dans cet état, soit faire revenir l'organe 12 dans sa position neutre, l'armature du condensateur qui lui est reliée restant alors "en l'air".

Pour provoquer l'effacement du signe affiché, on commande le basculement de l'organe 12 de telle sorte que le condensateur puisse se décharger à travers la cellule électrolytique. Le courant de décharge provoque alors la redissolution de la couche de métal. La quantité de charges utilisée à l'effacement se trouve donc être , par construction même, égale à la quantité de charges utilisée à l'affichage.

Eventuellement, si l'on désire obtenir un léger excès de charge à l'effacement, on peut disposer, en parallèle sur la cellule 2, un circuit constitué par une résistance 18 et une diode 20. Au cours de l'affichage, un courant $I$ circule dans la cellule et un courant $i$ dans le circuit de dérivation. Le condensateur est donc chargé par un courant $I + i$. Au cours de l'effacement, la totalité de la charge qui a été ainsi emmagasinée dans le condensateur transite par la seule cellule, puisque la diode 20 est alors connectée en inverse, de sorte qu'on dispose d'un léger excès de charge par rapport à l'affichage.

Après cette description, on voit que l'invention procure de nombreux avantages par rapport aux procédés et dispositifs de l'art antérieur :

- très grande simplicité de l'électronique de commande,
- contrôle de l'égalité des charges électriques quelle que soit la température,
- très grande fiabilité puisque la valeur moyenne du courant ne peut être que nulle, même en cas de fausses manoeuvres de l'organe de commutation.

En ce qui concerne l'électrolyte utilisé dans la cellule de l'invention, il peut être de tout type connu, mais il est avantageusement constitué par un halogénure métallique par exemple un bromure ou un iodure d'argent, dissous dans un solvant organique, par exemple un mélange d'acétonitrile et d'alcool méthylique, comme décrit et revendiqué dans la demande de brevet français n° 76/18919 du 22 juin 1976 intitulée "Procédé d'amélioration de la durée de vie d'une cellule d'affichage électrolytique". Quant aux formes des électrodes, elles peuvent être quelconques : points, bandes, segments, etc...

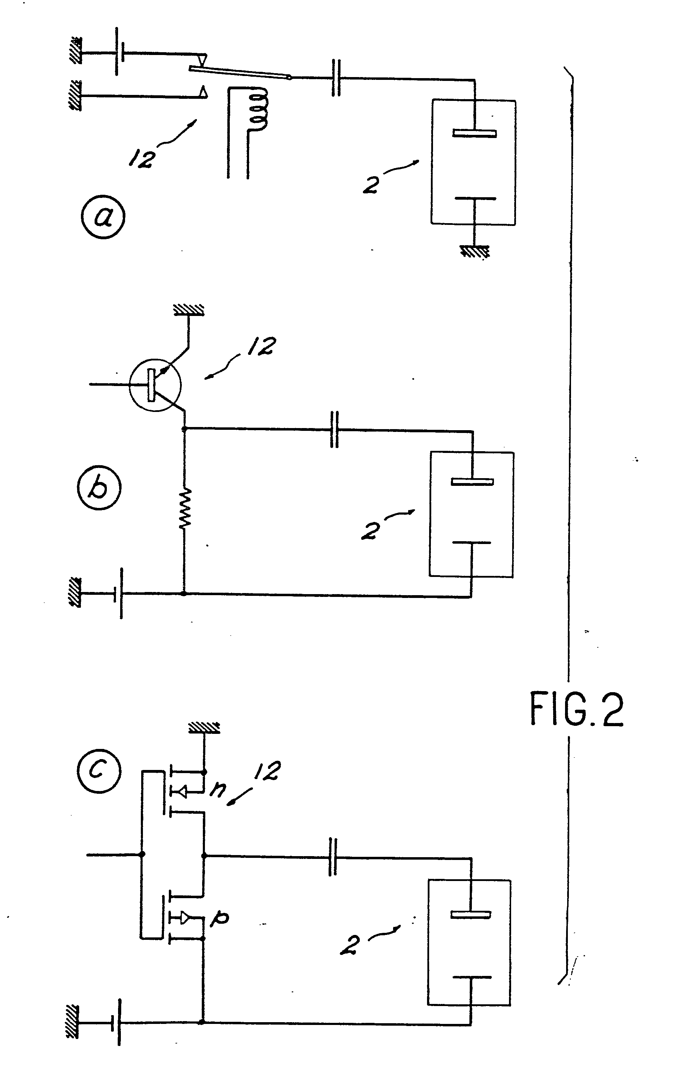

En ce qui concerne l'organe de commutation 12, il peut être de tout type connu. Sur la figure 2, quelques exemples de tels organes sont illustrés à titre explicatif : un relais électromécanique (2a), un transistor n p n (2b) pouvant constituer un élément de sortie d'un décodeur et un circuit à transistors MOS complémentaires (2c) comprenant un transistor de type p et un transistor de type n, la phase d'écriture se produisant lorsque le transistor de type n est conducteur et celui de type p bloqué, la phase d'effacement se produisant dans la situation inverse.

0001362

<u>REVENDICATIONS</u>

1. Procédé de commande d'une cellule d'affichage ·
électrolytique, dans lequel l'affichage d'un signe est
obtenu par le passage, dans un sens, d'une première charge
électrique à travers la cellule et l'effacement par le
passage d'une deuxième charge électrique dans le sens contraire, caractérisé en ce que l'affichage s'effectue en chargeant
un condensateur à travers la cellule au moyen d'une source
de tension, et en ce que l'effacement s'effectue en déchargeant ledit condensateur à travers ladite cellule.

2. Circuit de commande d'une cellule d'affichage
électrolytique, mettant en oeuvre le procédé de la revendication 1, ladite cellule possédant une électrode et une
contre-électrode, caractérisé en ce qu'il comprend un
condensateur dont une première armature est reliée à l'électrode de la cellule et une seconde armature à un organe de
commutation apte à relier cette seconde armature, soit à
une source de tension continue, soit à ladite contre-
électrode.

3. Circuit de commande selon la revendication 2,
caractérisé en ce qu'il comprend en outre un circuit
diode-résistance disposé en parallèle sur la cellule.

B 6214.3 RS

FIG.1

0001362

FIG.2

| Catégorie | DOCUMENTS CONSIDERES COMME PERTINENTS<br>Citation du document avec indication, en cas de besoin, des parties pertinentes | Revendica-<br>tion<br>concernée | CLASSEMENT DE LA DEMANDE (Int. Cl.²) |
|---|---|---|---|
| A | <u>US - A - 3 245 313</u> (S. ZAROMB)<br>*  Colonne 3, lignes 3-12; figures 1 et 3 *<br><br>-- | 1 | G 02 F 1/17 |
| A | <u>US - A - 3 416 248</u> (CH.G. KALT et al.)<br>*  Colonne 6, lignes 46-63 *<br><br>---- | 1 | |

**DOMAINES TECHNIQUES RECHERCHES (Int. Cl.²)**

G 02 F  1/17
          1/19
G 06 F  3/14

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 12-12-1978 | BORMS |

OEB Form 1503.1  06.78